Europäisches Patentamt

European Patent Office

Office européen des brevets

(19)

(11) Veröffentlichungsnummer: **0 190 688**

**A2**

(12) **EUROPÄISCHE PATENTANMELDUNG**

(21) Anmeldenummer: 86101324.1

(22) Anmeldetag: 01.02.86

(51) Int. Cl.⁴: **B 01 D 53/34**
B 01 D 47/06, B 05 B 7/06

(30) Priorität: 07.02.85 DE 3504167

(43) Veröffentlichungstag der Anmeldung:
**13.08.86** Patentblatt **86/33**

(84) Benannte Vertragsstaaten:
AT BE CH DE FR GB IT LI LU NL SE

(71) Anmelder: **L. & C. Steinmüller GmbH**
**Postfach 10 08 55/10 08 65 Fabrikstrasse 1**
**D-5270 Gummersbach(DE)**

(72) Erfinder: **Grethe, Klaus, Dr.-Ing.**
**Hochstrasse 48**
**D-5270 Gummersbach 31(DE)**

(72) Erfinder: **Steven, Hubert, Ing. (grad.)**
**Schürweg 8**
**D-5270 Gummersbach 1(DE)**

(74) Vertreter: **Carstens, Wilhelm, Dipl.-Phys.**
**L. & C. Steinmüller GmbH Patentabteilung Postfach 10**
**08 55/10 08 65**
**D-5270 Gummersbach 1(DE)**

(54) **Verfahren und Vorrichtung zur Reinigung von Rauchgas mit fliessfähigem Absorptionsmittel nach dem Prinzip der Luftstromzerstäubung.**

(57) Bei einem Verfahren und einer Vorrichtung zur Reinigung von mit Schadstoff beladenem Rauchgas mit einem fließfähigen Absorptionsmittel in einem in einer Gasreinigungsanlage angeordneten Zerstäubungsapparat, mit mindestens einer Einzeldüse, in der das fließfähige Absorptionsmittel als Zerstäubungsgut im Gleichstrom mit einem Gas als Zerstäubungsmedium nach dem Prinzip der Luftstromzerstäubung zu einer feinen Tröpfchenströmung unter gleichzeitiger intensiver Vermischung der Stoffströme zerstäubt wird, ist erfindungsgemäß vorgesehen, daß das Zerstäubungsmedium (1a; 2a; 3a) in zwei Teilströmen eine mit einer Zerstäuberschneide (19; 29; 39; 49) ausgestattete Einzeldüse (11; 21; 31; 41) durchströmt, wobei der eine Teilstrom des Zerstäubungsmediums (1a; 2a; 3a) auf einer Seite der Zerstäuberschneide (19; 29; 39; 49) das in Form eines Filmes aufgebrachte Zerstäubungsgut (1c; 2c; 3c) in Richtung der Düsenaustrittsöffnung überströmt, so daß der Zerstäubungsgutfilm getrieben und beim Ausströmen aus der Düsenaustrittsöffnung über die Zerstäuberschneide (19; 29; 39; 49) zerstäubt wird, und wobei der andere Teilstrom auf der anderen Seite der Zerstäuberschneide (19 29; 39; 49) der feinen Tröpfchenströmung zugemischt wird.

FIG. 1b

EP 0 190 688 A2

L. & C. Steinmüller GmbH   5270 Gummersbach, den 13.01.1986
Postfach 10 08 55/65                         0190688

-1-

## Beschreibung

## Verfahren und Vorrichtung zur Reinigung von Rauchgas mit fließfähigem Absorptionsmittel nach dem Prinzip der Luftstromzerstäubung

Die Erfindung betrifft ein Verfahren und eine Vorrichtung zur Reinigung von mit Schadstoff beladenem Rauchgas mit einem fließfähigen Absorptionsmittel in einem in einer Gasreinigungsanlage angeordneten Zerstäubungsapparat, mit mindestens einer Einzeldüse, in der das fließfähige Absorptionsmittel als Zerstäubungsgut im Gleichstrom mit einem Gas als Zerstäubungsmedium nach dem Prinzip der Luftstromzerstäubung zu einer feinen Tröpfchenströmung unter gleichzeitiger intensiver Vermischung der Stoffströme zerstäubt wird.

Es sind Verfahren und Vorrichtungen zur Zerstäubung von Additivsuspension als fließfähiges Absorptionsmittel in Rauchgasreinigungsanlagen bekannt, die in Abhängigkeit von der Art der Reinigungsanlage auf verschiedenen Zerstäubungsverfahren basieren.

So sind für Rauchgasreinigungsanlagen, welche als Sprühabsorptionstrockner ausgelegt sind, z.B. Zerstäuber nach dem "Rotary-Disc"-Prinzip bekannt. Diese Zerstäuber

./.

bestehen im wesentlichen aus einer sich mit hoher Drehzahl drehenden Scheibe, welche mit dem Zerstäubungsgut beaufschlagt wird. Durch die entstehenden Fliehkräfte wird das Zerstäubungsgut über den Rand der Scheibe geschleudert, wodurch ein hohlkegeliger Tropfenstrahl erzeugt wird. Das Rauchgas und die Additivsuspension werden an verschiedenen Orten in den Reaktor gegeben. Eine optimale Vermischung der beiden Ströme kann unter diesen Bedingungen nicht erreicht werden. Es ist weiterhin damit zu rechnen, daß durch das Vorbeiströmen von Rauchgas Anbackungen an der Zerstäuberscheibe gebildet werden, indem das Rauchgas mit der Additivsuspension an der nicht direkt beaufschlagten Seite der Scheibe reagiert und/oder bereits reagierte Substanz an solche Stellen transportiert wird. Durch die Anbackungen wird die Zerstäubungsqualität beeinträchtigt. Ein anderer Nachteil eines solchen Zerstäubers liegt in der Apparatur mit sich drehenden Konstruktionselementen und der damit zusammenhängenden mechanischen Beanspruchung.

Rauchgasreinigungsanlagen nach dem Naßwäsche-Verfahren arbeiten in vielen Fällen mit Druckzerstäubern. Bei solchen Zerstäubern wird die Additivsuspension mit hohem Druck der Zerstäuberdüse zugeführt. In verschiedenen Ausführungen wird die Strömung der Additivsuspension in der Düse verdrallt und beim Ausströmen aufgrund der bei der Druckentspannung entstehenden Kräfte zerstäubt. Im Vergleich mit anderen Zerstäubersystemen liefern die Druckzerstäuber relativ große Tropfendurchmesser. Ein besonderer Nachteil liegt jedoch darin, daß Druckzerstäuber nur für den Auslegungsdruck die geforderte Zerstäubungsqualität liefern und deshalb für den Teillastbetrieb relativ schlechte Ergebnisse liefern. Diese Nachteile werden auch nicht dadurch beseitigt, daß verschiedene Modifikationen des Druckzerstäubers berücksichtigt werden. So wird z.B. eine Düse verwendet, die wegen des relativ großen Düseninnenvolumens und der großen Düsenaustrittsöffnung eine Beschleunigung des
Zerstäubungsgutes bereits in der Düse bewirkt. Durch
Verdrallung der Strömung entsteht beim Austritt aus der
Düse ein relativ weiter hohlkegeliger Tropfenstrahl. Die
weiter oben genannten Nachteile bezüglich der Vermischung
zwischen Additiv und Rauchgas gelten auch hier.

Die vorliegende Erfindung basiert daher auf der
Aufgabenstellung, daß in Rauchgasreinigungsanlagen, welche
entweder nach der Sprühabsorptionstechnik oder als
Naßwäsche-Verfahren ausgelegt sind, eine hochqualitative
Zerstäubung der Additivsuspension unter gleichzeitiger
intensiver Vermischung mit dem Rauchgas auch für die
Teillastbetriebsweise erreicht werden soll - ohne
Beeinträchtigung durch Anbackungen im oder am Zerstäuber.

Zur Lösung dieser Aufgabe wird vorgeschlagen, daß das
Zerstäubungsmedium in zwei Teilströmen eine mit einer
Zerstäuberschneide ausgestattete Einzeldüse durchströmt,
wobei der eine Teilstrom des Zerstäubungsmediums auf einer
Seite der Zerstäuberschneide das in Form eines Filmes
aufgebrachte Zerstäubungsgut in Richtung der
Düsenaustrittsöffnung überströmt, so daß der
Zerstäubungsgutfilm getrieben und beim Ausströmen aus der
Düsenaustrittsöffnung über die Zerstäuberschneide
zerstäubt wird, und wobei der andere Teilstrom auf der
anderen Seite der Zerstäuberschneide der feinen
Tröpfchenströmung zugemischt wird.

Zur Erhöhung des Zerstäubungseffekts und im Hinblick auf
eine besondere Gestaltung der düsennahen Strömung werden
im Falle einer rotationssymetrischen Einzeldüse entweder
der Zerstäubungsgutstrom oder der Zerstäubungsmediumstrom
oder beide Stoffströme in gleicher oder entgegengesetzter
Drehrichtung verdrallt.

Weiterhin wird vorgeschlagen, daß als Zerstäubungsmedium

./.

entweder ein Teilstrom des Rauchgases oder Luft oder Dampf verwendet wird.

Als Zerstäubungsgut wird eine Additivsuspension aus Wasser und Kalkhydrat oder Kalkstein mit einem Feststoffanteil zwischen 6 und 30 Gew.-% verwendet.

Zur Erzielung einer optimalen Zerstäubungsqualität wird das Massenstromverhältnis zwischen Zerstäubungsmedium und Zerstäubungsgut mindestens zu 0,3 gewählt, das jedoch in Richtung größer werdender Werte beliebig sein kann.

Zur Erzeugung der erforderlichen Tropfengröße in einer nassen Rauchgaswäsche wird ein Düsenvordruck des Zerstäubungsmediums von mindestens 100 mm Ws gewählt.

Zur Rauchgasreinigung in einem als Sprüh-Absorptions-Trockner ausgelegten Apparat wird der Düsenvordruck des Zerstäubungsmediums größer als 500 mm Ws gewählt, wenn das Massentromverhältnis zwischen Zerstäubungsmedium und Zerstäubungsgut kleiner als 1 ist.

Wenn das Verhältnis der Massenströme des Zerstäubunsmediums und des Zerstäubungsgutes größer als 1 gewählt wird, beträgt der Düsenvordruck des Zerstäubungsmediums mindestens 100 mm Ws.

Ferner wird vorgeschlagen, daß im Falle der Rauchgasreinigung mit Trockenadditiv als Zerstäubungsgut Wasser zur Rauchgaskonditionierung vor dem Reaktor verwendet wird.

Als weiteres Verfahrensmerkmal ist vorgesehen, daß jedes beliebige Teillastverhältnis im Betrieb der Rauchgasreinigungsanlage für Massenstromverhältnisse zwischen Zerstäubungsmedium und Zerstäubungsgut größer als 2 bei gleichbleibender Zerstäubungsqualität durch die

./.

gegenseitig voneinander nahezu unabhängige Variation der
Einzelströme gewählt wird.

Die erforderliche Zerstäubungsqualität kann für jedes beliebige Teillastverhältnis im Betrieb einer Rauchgasreinigungsanlage bei Massenstromverhältnissen zwischen Zerstäubungsmedium und Zerstäubungsgut im Bereich 0,3 bis 2
gewährleistet werden, indem die gegenseitig von einander
nahezu unabhängige Variation der Einzelströme möglich ist.

Zur Durchführung des Verfahrens wird eine Vorrichtung, bestehend aus einem in einer Gasreinigungsanlage angebrachten
Zerstäubungsapparat mit mindestens einer Einzeldüse mit
einer Düsenaustrittsöffnung für ein Zerstäubungsgut und
einem Zerstäubungsmedium, vorgeschlagen, die erfindungsgemäß dadurch gekennzeichnet ist, daß in der Einzeldüse des
Zerstäubungsapparates eine Düsenwand in einer an der Düsenaustrittsöffnung befindlichen Zerstäuberschneide endet, wobei sich auf der einen Seite der Zerstäuberschneide vor der
Düsenwand mindestens eine Öffnung für das Zerstäubungsgut
sowie eine Öffnung für den einen Teilstrom des Zerstäubungsmediums und auf der anderen Seite der Zerstäuberschneide eine zweite Düsenaustrittsöffnung für den anderen
Teilstrom des Zerstäubungsmediums befindet.

Zur weiteren Ausgestaltung der Vorrichtung ist vorgesehen,
daß als Einzeldüse eine rotationssymetrische Düse eingesetzt ist, in der die Öffnung für das Zerstäubungsgut ein
über dem Gesamtumfang der Düse befindlicher, ringförmiger
Spalt oder eine Anzahl von Einzelöffnungen ist.

Weiterhin ist vorgesehen, daß die Einzeldüse entweder mit
einer tangentialen Zuführung in die Düse oder mit Körpern
zur gleich- oder gegensinnigen Drallerzeugung für die Strömung des Zerstäubungsmediums und/oder des Zerstäubungsgutes
ausgestattet ist.

Ferner wird vorgeschlagen, daß als Einzeldüse eine

./.

5

Flachdüse eingesetzt ist, in der die Öffnung für das
Zerstäubungsgut ein über der Gesamtbreite der Düse
geradliniger Spalt oder eine Anzahl von Einzelöffnungen
ist.

Die Anwendung des erfindungsgemäßen Verfahrens ist
nachfolgend anhand verschiedener Ausführungsbeispiele in
Verbindung mit den zugehörigen Figuren näher beschrieben.
Es zeigen

Fig. 1a    eine schematische Ansicht eines vertikal
aufgestellten rotationssymetrischen
Gasreinigungsbehälters mit einem im Zentrum des
Behälterdaches angeordneten Zerstäubungsapparates,

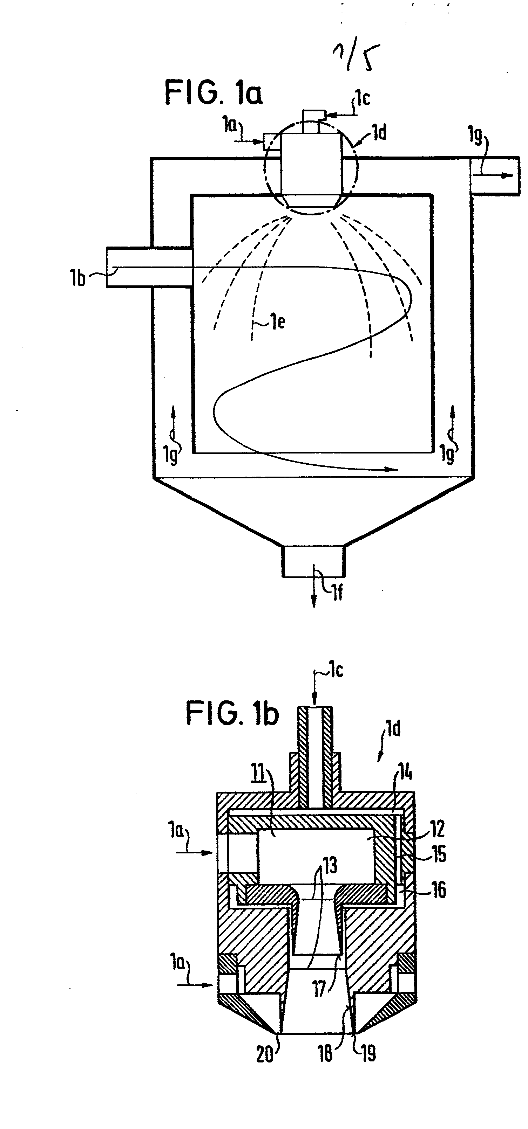

Fig. 1b    eine Detailansicht des Zerstäubungsapparates des
in Fig. 1a dargestellten Behälters,

Fig. 2a    eine schematische Aufrißansicht IIa-IIa eines
vertikal aufgestellten rotationssymetrischen
Gasreinigungsbehälters mit Tauchrohr und einem
tangential angeordneten Zerstäubungsapparat,

Fig. 2b    eine schematische Querschnittsansicht des in Fig.
2a dargestellten Behälters,

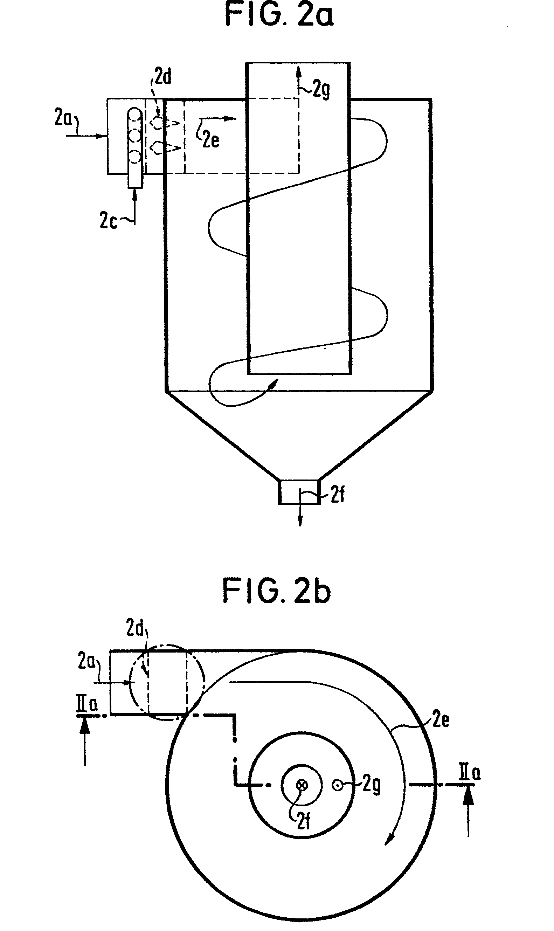

Fig. 3a    eine Detailansicht einer möglichen
Ausführungsform des Zerstäubungsapparates des in
den Fig. 2a und 2b dargestellten Behälters,

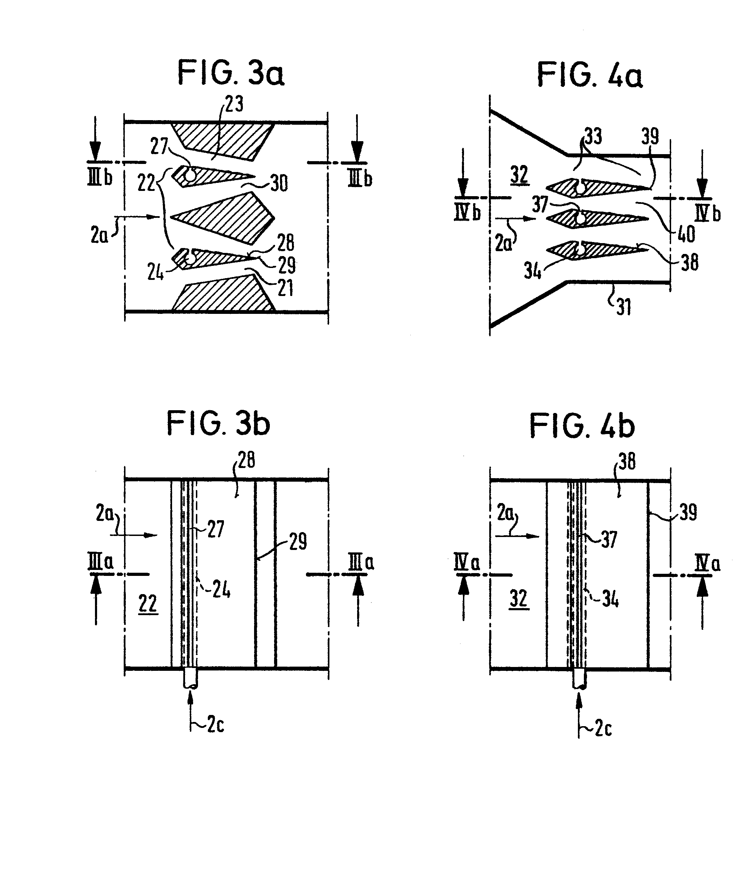

Fig. 3b    eine gegenüber der Ansicht in Fig. 3a um $90^{o}$
versetzte Detailansicht des Zerstäubungsapparates,

Fig. 4a    eine Detailansicht einer weiteren möglichen
Ausführungsform des Zerstäubungsapparates des in
Fig. 2a und 2b dargestellten Behälters,

./.

0190688

Fig. 4b    eine gegenüber der Ansicht in Fig. 4a um 90°
           versetzte Detailansicht des Zerstäubungsapparates,

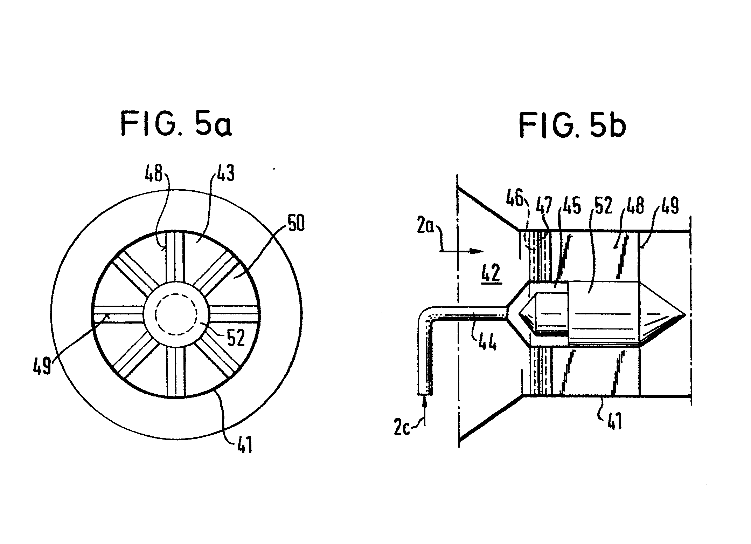

Fig. 5a    eine Detailansicht einer dritten möglichen
           Ausführungsform des Zerstäubungsapparates des in
           den Fig. 2a und 2b dargestellten Behälters,

Fig. 5b    eine gegenüber der Ansicht in Fig. 5a um 90°
           versetzte Detailansicht des Zerstäubungsapparates,

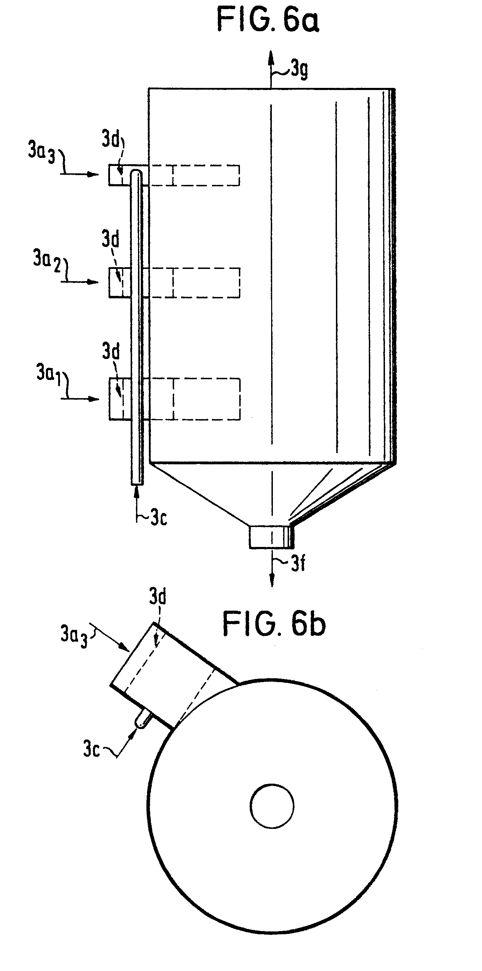

Fig. 6a    eine schematische Aufrißansicht eines vertikal
           aufgestellten rotationssymetrischen
           Gasreinigungsbehälters mit mehreren tangential
           angeordneten Zerstäubungsapparaten nach einer in
           den Fig. 3a, 4a und 5a dargestellten
           Ausführungsform,

Fig. 6b    eine schematische Querschnittsansicht des in Fig.
           6a dargestellten Behälters.

In einem in Fig. 1a dargestellten vertikal aufgestellten
rotationssymetrischen Behälter, der als Sprüh-Absorptions-
Trockner oder Naßwäscher zur Rauchgasreinigung ausgelegt
ist, befindet sich ein im Zentrum des Behälterdaches
angeordneter Zerstäubungsapparat (1d) mit einer
Zerstäuberdüse (11). Durch Zuführung (1a) des gesamten
Rauchgases oder eines Rauchgasteilstromes oder stattdessen
Luft oder Dampf von der Menge des Rauchgasteilstromes als
Zerstäubungsmedium zur Düse (11) und durch eine Zuführung
(1c) einer für eine Additivsuspension als Zerstäubungsgut
wird ein dichter und weitgehend homogener Tropfennebel
(1e) erzeugt, der ein zur Verfügung stehendes
Reaktorvolumen ausfüllt. Ein Teil des Rauchgases oder -
wenn Luft bzw. Dampf als Zerstäubungsmedium dienen - das
gesamte Rauchgas kann über eine Zuführung (1b) in dem
Behälter zugegeben werden.

                                                      ./.

Im Falle der Auslegung als Sprüh-Absorptions-Trockner
werden Reaktionsprodukte in großer Teilchengröße im
unteren Bereich des Behälters vom Gasstrom abgeschieden
und über einen Ausgang (1f) abgezogen. Das gereinigte,
jedoch mit Flugstaub beladene Rauchgas verläßt den
Behälter über einen Auslaß (1g).

Im Falle der Auslegung als Naßwäscher scheiden sich die
Tropfen im unteren Teil des Behälters weitgehend vom
Rauchgas ab und verbleiben zunächst in dem über dem
Ausgang (1f) stehenden Sumpf. Das Rauchgas wird über den
Auslaß (1g) abgezogen und einem nicht näher dargestellten
Tropfenabscheider zugeführt.

Der in Fig. 1b dargestellte Zerstäubungsapparat (1d)
besteht gemäß Ausführungsbeispiel im wesentlichen aus
einer rotationssymetrischen Zerstäuberdüse (11). Die
Zuführungen (1a) für das Zerstäubungsmedium können derart
angeordnet sein, daß durch tangentiale Einströmung eine
verdrallte Strömung des Zerstäubungsmediums erreicht wird.
Der verdrallte Hauptstrom des Zerstäubungsmediums fließt
über einen Düseneinlauf (12) in einen Düsendurchgang (13).
Das Zerstäubungsgut fließt durch die Zuführung (1c) in die
Düse und gelangt über ein Verteilsystem (14, 15, 16) zur
einer über dem Umfang der Düse kontinuierlichen Öffnung
(17). Ein sich ausbildender Film auf einer Düsenwand (18)
wird durch die Strömung des Zerstäubungsmediums zu einer
Zerstäuberschneide (19) getrieben. Ein anderer Teil des
Zerstäubungsmediums strömt über einen Spalt (20) auf der
anderen Seite der Zerstäuberschneide (19) aus, wodurch
Anbackungen an der Düse verhindert werden.

Als weiteres Ausführungsbeispiel dient ein in den Figuren
2a und 2b dargestellter Naßwäscher kleinerer bis mittlerer
Leistungskapazität, bestehend aus einem vertikal
aufgestellten rotationssymtrischen Behälter mit Tauchrohr.

./.

Das Rauchgas als Zerstäubungsmedium strömt über eine
tangentiale Zuführung (2a) in den Naßwäscher und
durchströmt dabei einen Zerstäubungsapparat (2d). In den
Figuren 3a bis 5b sind drei Ausführungsbeispiele für den
Zerstäubungsapparat (2d) dargestellt:

A. (Fig. 3a und 3b):
   Der Zerstäubungsapparat, bestehend aus einer oder
   mehreren Düsen (21), ist in dem Zuführungskanal (2a)
   mit rechteckigem Querschnitt angeordnet. Jede einzelne
   Düse besteht aus einem Venturikanal (22, 23) und einer
   darin angeordneten Zerstäuberschneide (29). Über einen
   in jeder Zerstäuberschneide (29) befindlichen
   Verteilerkanal (24) fließt das Zerstäubungsgut aus
   einem Spalt (27) aus und bildet einen Film über einer
   Wand (28). Das Zerstäubungsmedium strömt über die Wand
   (28) und über die andere Seite der Zerstäuberschneide
   (29) durch eine Öffnung (30).

B. (Fig. 4a und 4b):
   Eine oder mehrere Zerstäuberschneiden (39) sind,
   ähnlich wie unter A. beschrieben, in einem als
   Venturikanal ausgebildeten Zulauf zum Wäscher
   angeordnet.

C. (Fig. 5a und 5b):
   Mehrere Zerstäuberschneiden (49) sind in einem als
   rotationssymetrischer Venturikanal ausgebildeten Zulauf
   zum Naßwäscher sternförmig auf einer Nabe (52)
   angeordnet. Das Zerstäubungsgut fließt über einen
   Zulauf (2c) in eine Rohrleitung (44), die in einen
   Ringkanal (45) in der Nabe (52) mündet. Das
   Zerstäubungsgut fließt weiter über Verteilkanäle (46)
   durch eine Öffnung (47) auf Wände (48).

In den Figuren 6a und 6b ist als weiteres Beispiel eine
andere Ausführungsform eines Naßwäschers mittlerer und größerer Leistungskapazität mit mehreren tangentialen Zuführungen z.B. ($3a_1$, $3a_2$, $3a_3$) dargestellt, wobei jede Zuführung, wie in den Figuren 2a bis 5b beschrieben, ausgeführt wird. Die mengenmäßige Verteilung von Rauchgas und Addidivsuspension auf die Zuführung erfolgt in der Weise, daß das Rauchgas überwiegend durch die unteren Zuführungen und die Suspension über die oberen Zuführungen zuströmt.

L. & C. Steinmüller GmbH    5270 Gummersbach, den 13.01.1986
Postfach 10 08 55/65                    0190688

Patentansprüche

1. Verfahren zur Reinigung von mit Schadstoff beladenem
   Rauchgas mit einem fließfähigen Absorptionsmittel in
   einem in einer Gasreinigungsanlage angeordneten
   Zerstäubungsapparat, mit mindestens einer Einzeldüse,
   in der das fließfähige Absorptionsmittel als
   Zerstäubungsgut im Gleichstrom mit einem Gas als
   Zerstäubungsmedium nach dem Prinzip der
   Luftstromzerstäubung zu einer feinen Tröpfchenströmung
   unter gleichzeitiger intensiver Vermischung der
   Stoffströme zerstäubt wird,  d a d u r c h
   g e k e n n z e i c h n e t ,  daß das
   Zerstäubungsmedium (1a; 2a; 3a) in zwei Teilströmen
   eine mit einer Zerstäuberschneide (19; 29; 39; 49)
   ausgestattete Einzeldüse (11; 21; 31; 41) durchströmt,
   wobei der eine Teilstrom des Zerstäubungsmediums (1a;
   2a; 3a) auf einer Seite der Zerstäuberschneide (19; 29;
   39; 49) das in Form eines Filmes aufgebrachte
   Zerstäubungsgut (1c; 2c; 3c) in Richtung der
   Düsenaustrittsöffnung überströmt, so daß der
   Zerstäubungsgutfilm getrieben und beim Ausströmen aus
   der Düsenaustrittsöffnung über die Zerstäuberschneide
   (19; 29; 39; 49) zerstäubt wird, und wobei der andere
   Teilstrom auf der anderen Seite der Zerstäuberschneide
   (19; 29; 39; 49) der feinen Tröpfchenströmung
   zugemischt wird.

./.

2. Verfahren nach Anspruch 1, d a d u r c h
   g e k e n n z e i c h n e t , daß im Falle einer
   rotationssymetrischen Einzeldüse (11) entweder der
   Zerstäubungsgutstrom (1c) oder der
   Zerstäubungsmediumstrom (1a) oder beide Stoffströme in
   gleicher oder entgegengesetzter Drehrichtung verdrallt
   werden.

3. Verfahren nach Anspruch 1 oder 2, d a d u r c h
   g e k e n n z e i c h n e t , daß als
   Zerstäubungsmedium (1a) mindestens ein Teilstrom des zu
   reinigenden Rauchgases verwendet wird.

4. Verfahren nach Anspruch 1 oder 2, d a d u r c h
   g e k e n n z e i c h n e t , daß als
   Zerstäubungsmedium (1a) Luft verwendet wird.

5. Verfahren nach Anspruch 1 oder 2, d a d u r c h
   g e k e n n z e i c h n e t , daß als
   Zerstäubungsmedium (1a) Dampf verwendet wird.

6. Verfahren nach einem der Ansprüche 1 bis 5,
   d a d u r c h  g e k e n n z e i c h n e t , daß als
   Zerstäubungsgut (1c; 2c; 3c) eine Additivsuspension aus
   Wasser und Kalkhydrat oder Kalkstein mit einem
   Feststoffanteil zwischen 6 und 30 Gew.-% verwendet wird.

7. Verfahren nach einem der Ansprüche 1 bis 6,
   d a d u r c h  g e k e n n z e i c h n e t , daß das
   Massenstromverhältnis zwischen Zerstäubungsmedium und
   Zerstäubungsgut mindestens zu 0,3 gewählt wird, jedoch
   in Richtung größer werdender Werte beliebig sein kann.

8. Verfahren nach einem der Ansprüche 1 bis 7,
   d a d u r c h  g e k e n n z e i c h n e t , daß zur
   Erzeugung der erforderlichen Tropfengröße in einer
   nassen Rauchgaswäsche ein Düsenvordruck des

./.

Zerstäubungsmediums von mindestens 100 mm Ws gewählt ·
wird.

9.  Verfahren nach einem der Ansprüche 1 bis 7,
    d a d u r c h   g e k e n n z e i c h n e t ,   daß
    zur Rauchgasreinigung in einem als
    Sprüh-Absorptions-Trockner ausgelegten Apparat der
    Düsenvordruck des Zerstäubungsmediums größer als 500
    mm Ws gewählt wird, wenn das Massentromverhältnis
    zwischen Zerstäubungsmedium und Zerstäubungsgut
    kleiner als 1 ist.

10. Verfahren nach einem der Ansprüche 1 bis 7,
    d a d u r c h   g e k e n n z e i c h n e t ,   daß
    zur Rauchgasreinigung in einem als
    Sprüh-Absorptions-Trockner ausgelegten Apparat der
    Düsenvordruck des Zerstäubungsmediums mindestens 100
    mm Ws beträgt, wenn die Massenströme des
    Zerstäubungsmediums und des Zerstäubungsgutes im
    Verhältnis zueinander größer als 1 gewählt werden.

11. Verfahren nach einem der Ansprüche 1 bis 5 und 7,
    d a d u r c h   g e k e n n z e i c h n e t ,   daß im
    Falle der Rauchgasreinigung mit Trockenadditiv als
    Zerstäubungsgut (1c; 2c; 3c) Wasser zur
    Rauchgaskonditionierung vor dem Reaktor verwendet wird.

12. Verfahren nach einem der Ansprüche 1 bis 11,
    d a d u r c h   g e k e n n z e i c h n e t ,   daß
    jedes beliebige Teillastverhältnis im Betrieb der
    Rauchgasreinigungsanlage für Massenstromverhältnisse
    zwischen Zerstäubungsmedium und Zerstäubungsgut größer
    als 2 bei gleichbleibender Zerstäubungsqualität durch
    die gegenseitig voneinander nahezu unabhängige
    Variation der Einzelströme gewählt wird.

13. Verfahren nach einem der Ansprüche 1 bis 11, dadurch gekennzeichnet, daß die erforderliche Zerstäubungsqualität für jedes beliebige Teillastverhältnis im Betrieb der Rauchgasreinigungsanlage und Massenstromverhältnisse zwischen Zerstäubungsmedium und Zerstäubungsgut im Bereich 0,3 bis 2 durch die gegenseitig voneinander unabhängige Variation der Einzelströme gewährleistet wird.

14. Vorrichtung zur Durchführung des Verfahrens nach einem der Ansprüche 1 bis 13, bestehend aus einem in einer Gasreinigungsanlage angebrachten Zerstäubungsapparat mit mindestens einer Einzeldüse, mit einer Düsenaustrittsöffnung für ein Zerstäubungsgut und einem Zerstäubungsmedium, dadurch gekennzeichnet, daß in der Einzeldüse (11; 21; 31; 41) des Zerstäubungsapparates (1d; 2d; 3d) eine Düsenwand (18; 28; 38; 48) in einer an der Düsenaustrittsöffnung befindlichen Zerstäuberschneide (19; 29; 39; 49) endet, wobei sich auf der einen Seite der Zerstäuberschneide (19; 29; 39; 49) vor der Düsenwand (18; 28; 38; 48) mindestens eine Öffnung (17; 27; 37; 47) für das Zerstäubungsgut (1c; 2c; 3c) sowie eine Öffnung (13; 23; 33; 43) für den einen Teilstrom des Zerstäubungsmediums und auf der anderen Seite der Zerstäuberschneide (19; 29; 39; 49) eine zweite Düsenaustrittsöffnung (20; 30; 40; 50) für den anderen Teilstrom des Zerstäubungsmediums (1a; 2a; 3a) befindet.

15. Vorrichtung nach Anspruch 14, dadurch gekennzeichnet, daß als Einzeldüse eine rotationssymetrische Düse (11) eingesetzt ist, in der die Öffnung (17) für das Zerstäubungsgut (1c) ein über dem Gesamtumfang der Düse befindlicher, ringförmiger Spalt oder eine Anzahl von Einzelöffnungen ist.

./.

**0190688**

16. Vorrichtung nach Anspruch 15, d a d u r c h
g e k e n n z e i c h n e t , daß die Einzeldüse (11)
mit einer tangentialen Zuführung in die Düse zur
gleich- oder gegensinnigen Drallerzeugung für die
Strömung des Zerstäubungsmediums (1a) und/oder des
Zerstäubungsgutes (1c) ausgestattet ist.

17. Vorrichtung nach Anspruch 15, d a d u r c h
g e k e n n z e i c h n e t , daß die Einzeldüse
(11) mit Körpern zur gleich- oder gegensinnigen
Drallerzeugung für die Strömung des
Zerstäubungsmediums (1a) und/oder des
Zerstäubungsgutes (1c) ausgestattet ist.

18. Vorrichtung nach Anspruch 14, d a d u r c h
g e k e n n z e i c h n e t , daß als Einzeldüse
eine Flachdüse (21; 31; 41) eingesetzt ist, in der die
Öffnung (27; 37; 47) für das Zerstäubungsgut (2c; 3c)
ein über der Gesamtbreite der Düse geradliniger Spalt
oder eine Anzahl von Einzelöffnungen ist.

0190688

**FIG. 1a**

**FIG. 1b**

## FIG. 2a

## FIG. 2b

FIG. 3a

FIG. 4a

FIG. 3b

FIG. 4b

## FIG. 5a

## FIG. 5b

FIG. 6a

3a₃ →   3d

3a₂ →   3d

3a₁ →   3d

~3c

~3g

~3f

FIG. 6b

3d

3a₃ →

3c ~